# EUROPÄISCHE PATENTSCHRIFT

(11) **EP 4 259 512 B1**
(45) Veröffentlichungstag und Bekanntmachung des Hinweises auf die Patenterteilung: **03.06.2026**
(21) Anmeldenummer: 21836383.6
(22) Anmeldetag: 07.12.2021
(51) Int. Cl.: B62D 15/02, G08G 1/04, G08G 1/0967

(54) **VERFAHREN ZUM ZUMINDEST TEILAUTOMATISIERTEN FÜHREN EINES KRAFTFAHRZEUGS**
METHOD FOR THE AT LEAST PARTLY AUTOMATED GUIDANCE OF A MOTOR VEHICLE
PROCÉDÉ DE GUIDAGE AU MOINS PARTIELLEMENT AUTOMATISÉ D'UN VÉHICULE AUTOMOBILE

(30) Priorität: 09.12.2020 DE 102020215537
(43) Veröffentlichungstag der Anmeldung: 18.10.2023
(73) Patentinhaber: Robert Bosch GmbH, 70442 Stuttgart (DE)
(72) Erfinder: PEKAROVSKIY, Alexander, 70806 Kornwestheim (DE); NIMMO, Matthew, 71642 Ludwigsburg (DE)
(86) Internationale Anmeldenummer: PCT/EP2021/084613
(87) Internationale Veröffentlichungsnummer: WO 2022/122738

(56) Entgegenhaltungen:
- EP-A1- 3 333 049
- JP-A- 2019 087 161
- US-A1- 2016 318 510
- US-A1- 2020 349 838

## Beschreibung

Die Erfindung betrifft ein Verfahren zum zumindest teilautomatisierten Führen eines Kraftfahrzeugs innerhalb eines Parkplatzes. Die Erfindung betrifft eine Vorrichtung, ein System und ein Computerprogramm sowie ein maschinenlesbares Speichermedium.

### Stand der Technik

Die Offenlegungsschrift DE 10 2017 212 376 A1 offenbart ein Verfahren und ein System zum Detektieren eines freien Bereichs innerhalb eines Parkplatzes.

Die Offenlegungsschrift DE 10 2015 201 209 A1 offenbart ein Verfahren zum automatischen Verbringen eines Fahrzeugs von einer Übergabezone zu einem zugewiesenen Stellplatz innerhalb eines vorgegebenen Parkraums.

Die Offenlegungsschrift DE 10 2012 015 968 A1 offenbart ein Verfahren zum fahrerlosen Bewegen eines Fahrzeugs auf einer Parkfläche.

Die Offenlegungsschrift US 2020/0349838 A1 offenbart ein Verfahren zum zumindest teilautomatisierten betrieb eines Kraftfahrzeugs. Das Verfahren umfasst das Ermitteln einer geplanten, vom Kraftfahrzeug zu durchfahrenden Trajektorie. US 2020/349838 A1 offenbart insbesondere ein Verfahren zum zumindest teilautomatisierten Führen eines Kraftfahrzeugs innerhalb eines Parkplatzes unter Verwendung von zumindest einem innerhalb des Parkplatzes angeordneten Umfeldsensor, welcher jeweils eine Scanebene aufweist, die jeweils eine virtuelle Wand eines Fahrkorridors für das Kraftfahrzeug definiert.

Die Offenlegungsschrift EP 3333049 A1 offenbart ein Verfahren zum autonomen Manövrieren eines Kraftfahrzeugs auf einer Parkfläche, welche eine Mehrzahl von Stellplätzen für das Kraftfahrzeug aufweist, bei welchem mittels einer Infrastrukturvorrichtung der Parkfläche ein freier Stellplatz der Mehrzahl von Stellplätzen erkannt wird, Manövrierdaten, welche den freien Stellplatz beschreiben, bestimmt werden sowie an ein Fahrerassistenzsystem des Kraftfahrzeugs übertragen werden und das Kraftfahrzeug anhand der Manövrierdaten autonom zu dem freien Stellplatz manövriert wird.

Die Offenlegungsschrift US 2016/0318510 A1 offenbart ein Verfahren zum Bestimmen der Position eines Kraftfahrzeugs auf einer Verkehrsfläche eines Parkplatzes umfassend Schritte des Abtastens eines Kamerabilds der Verkehrsfläche mit dem Kraftfahrzeug, des Bestimmens einer Position des Kraftfahrzeugs auf der Basis des Kamerabilds, des Abtastens des Kraftfahrzeugs mittels eines stationären Sensors auf der Verkehrsfläche, und des Validierens oder Korrigierens der bestimmten Position auf der Basis der Abtastung mittels des stationären Sensors. Dabei ist der stationäre Sensor baugleich zu einem Parkplatzsensor, der dazu eingerichtet ist, das Vorhandensein eines auf einer Stellfläche des Parkplatzes abgestellten Kraftfahrzeugs zu bestimmen, wobei die Stellfläche mittels des Kraftfahrzeugs über die Verkehrsfläche erreicht werden kann.

### Offenbarung der Erfindung

Die der Erfindung zugrunde liegende Aufgabe ist darin zu sehen, ein Konzept zum effizienten zumindest teilautomatisierten Führen eines Kraftfahrzeugs innerhalb eines Parkplatzes bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum zumindest teilautomatisierten Führen eines Kraftfahrzeugs innerhalb eines Parkplatzes unter Verwendung von zumindest einem innerhalb des Parkplatzes angeordneten Umfeldsensor bereitgestellt, welcher jeweils eine Scanebene aufweist, die jeweils eine virtuelle Wand eines Fahrkorridors für das Kraftfahrzeug definiert, umfassend die folgenden Schritte:
Empfangen von Messdatensignalen, welche Messdaten des zumindest einen Umfeldsensors repräsentieren,
Ermitteln basierend auf den Messdaten, ob ein Objekt die virtuelle Wand durchdrungen hat,
Erzeugen von Steuersignalen zum zumindest teilautomatisierten Steuern einer Quer- und/oder Längsführung des Kraftfahrzeugs basierend auf einem Ergebnis des Ermittelns, ob zumindest ein Objekt die virtuelle Wand durchdrungen hat, und
Ausgeben der erzeugten Steuersignale.

Nach einem zweiten Aspekt wird eine Vorrichtung bereitgestellt, die eingerichtet ist, alle Schritte des Verfahrens nach dem ersten Aspekt auszuführen.

Nach einem dritten Aspekt wird ein System zum zumindest teilautomatisierten Führen eines Kraftfahrzeugs innerhalb eines Parkplatzes bereitgestellt, umfassend:
zumindest einen innerhalb des Parkplatzes angeordneten Umfeldsensor, welcher eine Scanebene aufweist, die eine virtuelle Wand eines Fahrkorridors für das Kraftfahrzeug definiert, und
die Vorrichtung nach dem zweiten Aspekt.

Nach einem vierten Aspekt wird ein Computerprogramm bereitgestellt, welches Befehle umfasst, die bei Ausführung des Computerprogramms durch einen Computer, beispielsweise durch die Vorrichtung nach dem zweiten Aspekt und/oder durch das System nach dem dritten Aspekt, diesen veranlassen, ein Verfahren gemäß dem ersten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis und schließt diese mit ein, dass die obige Aufgabe dadurch gelöst werden kann, dass die eine Längsseite des Fahrkorridors festlegende, virtuelle Wand dahingehend überwacht wird, ob ein Objekt diese durchdringt. Somit können Objekte, welche eine potenzielle Gefahr für das Kraftfahrzeug darstellen können, effizient detektiert werden. Entsprechend kann dann zum Beispiel das Kraftfahrzeug derart zumindest teilautomatisiert geführt werden, dass eine Kollision mit einem solchen Objekt vermieden wird. Das Kraftfahrzeug kann also in vorteilhafter Weise effizient zumindest teilautomatisiert innerhalb eines Parkplatzes geführt werden.

Die Formulierung "zumindest teilautomatisiertes Führen" umfasst einen oder mehrere der folgenden Fälle: assistiertes Führen, teilautomatisiertes Führen, hochautomatisiertes Führen, vollautomatisiertes Führen.

Assistiertes Führen bedeutet, dass ein Fahrer des Kraftfahrzeugs dauerhaft entweder die Quer- oder die Längsführung des Kraftfahrzeugs ausführt. Die jeweils andere Fahraufgabe (also ein Steuern der Längs- oder der Querführung des Kraftfahrzeugs) wird automatisch durchgeführt. Das heißt also, dass bei einem assistierten Führen des Kraftfahrzeugs entweder die Quer- oder die Längsführung automatisch gesteuert wird.

Teilautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) und/oder für einen gewissen Zeitraum eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss aber das automatische Steuern der Längs- und Querführung dauerhaft überwachen, um bei Bedarf manuell eingreifen zu können. Der Fahrer muss jederzeit zur vollständigen Übernahme der Kraftfahrzeugführung bereit sein.

Hochautomatisiertes Führen bedeutet, dass für einen gewissen Zeitraum in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht dauerhaft überwachen, um bei Bedarf manuell eingreifen zu können. Bei Bedarf wird automatisch eine Übernahmeaufforderung an den Fahrer zur Übernahme des Steuerns der Längs- und Querführung ausgegeben, insbesondere mit einer ausreichenden Zeitreserve ausgegeben. Der Fahrer muss also potenziell in der Lage sein, das Steuern der Längs- und Querführung zu übernehmen. Grenzen des automatischen Steuerns der Quer- und Längsführung werden automatisch erkannt. Bei einem hochautomatisierten Führen ist es nicht möglich, in jeder Ausgangssituation automatisch einen risikominimalen Zustand herbeizuführen.

Vollautomatisiertes Führen bedeutet, dass in einer spezifischen Situation (zum Beispiel: Fahren auf einer Autobahn, Fahren innerhalb eines Parkplatzes, Überholen eines Objekts, Fahren innerhalb einer Fahrspur, die durch Fahrspurmarkierungen festgelegt ist) eine Längs- und eine Querführung des Kraftfahrzeugs automatisch gesteuert werden. Ein Fahrer des Kraftfahrzeugs muss selbst nicht manuell die Längs -und Querführung des Kraftfahrzeugs steuern. Der Fahrer muss das automatische Steuern der Längs- und Querführung nicht überwachen, um bei Bedarf manuell eingreifen zu können. Vor einem Beenden des automatischen Steuerns der Quer- und Längsführung erfolgt automatisch eine Aufforderung an den Fahrer zur Übernahme der Fahraufgabe (Steuern der Quer- und Längsführung des Kraftfahrzeugs), insbesondere mit einer ausreichenden Zeitreserve. Sofern der Fahrer nicht die Fahraufgabe übernimmt, wird automatisch in einen risikominimalen Zustand zurückgeführt. Grenzen des automatischen Steuerns der Quer- und Längsführung werden automatisch erkannt. In allen Situationen ist es möglich, automatisch in einen risikominimalen Systemzustand zurückzuführen.

Nach einer Ausführungsform ist vorgesehen, dass der zumindest eine Umfeldsensor jeweils ein Element ausgewählt aus der folgenden Gruppe von Umfeldsensoren ist: Radarsensor, Lidarsensor, insbesondere 2D-Lidarsensor, Ultraschallsensor, Videosensor, Magnetfeldsensor und Infrarotsensor.

In einer Ausführungsform ist vorgesehen, dass das zumindest eine Objekt das Kraftfahrzeug umfasst, wobei das Ermitteln basierend auf den Messdaten, ob ein Objekt die virtuelle Wand durchdrungen hat, umfasst, dass basierend auf den Messdaten ermittelt wird, ob das Kraftfahrzeug die virtuelle Wand von innen bezogen auf den Fahrkorridor durchdrungen hat, wobei die Steuersignale basierend auf einem Ergebnis des Ermittelns erzeugt werden, ob das Kraftfahrzeug die virtuelle Wand von innen bezogen auf den Fahrkorridor durchdrungen hat.

Dadurch wird zum Beispiel der technische Vorteil bewirkt, dass effizient detektiert werden kann, ob das Kraftfahrzeug seinen ihm zugewiesenen Fahrkorridor zumindest teilweise verlässt, sodass in einem solchen Fall beispielsweise effizient Gegenmaßnahmen ergriffen werden können. Zum Beispiel können die Steuersignale derart erzeugt sein, dass bei einem zumindest teilautomatisierten Steuern der Quer- und/oder Längsführung des Kraftfahrzeugs basierend auf den ausgegebenen Steuersignalen dieses zumindest teilautomatisiert zurück in den Fahrkorridor geführt wird. Zum Beispiel kann das Kraftfahrzeug zumindest teilautomatisiert angehalten werden.

Erfindungsgemäß ist vorgesehen, dass das zumindest eine Objekt einen Überhang umfasst, wobei das Ermitteln basierend auf den Messdaten, ob ein Objekt die virtuelle Wand durchdrungen hat, umfasst, dass basierend auf den Messdatenermittelt wird, ob der Überhang die virtuelle Wand von außen bezogen auf den Fahrkorridor durchdrungen hat, wobei die Steuersignale basierend auf einem Ergebnis des Ermittelns erzeugt werden, ob der Überhang die virtuelle Wand von außen bezogen auf den Fahrkorridor durchdrungen hat.

Dadurch wird zum Beispiel der technische Vorteil bewirkt, dass Objekte, welche von außen in den Fahrkorridor hineinragen, effizient detektiert werden können. Ein solches Objekt, also ein Überhang kann ein potentielles Kollisionsobjekt für das Kraftfahrzeug sein. Entsprechend können in einem solchen Fall effizient geeignete Gegenmaßnahmen ergriffen werden. Solche Gegenmaßnahmen umfassen zum Beispiel ein zumindest teilautomatisiert geführtes Anhalten oder ein zumindest teilautomatisiert geführtes Ausweichen basierend auf entsprechend erzeugten Steuersignalen.

Ein Überhang im Sinne der Beschreibung ist insbesondere ein Objekt, welches über seine eigene Grundfläche hinausragt. Ein solches Objekt ist zum Beispiel eine geöffnete Heckklappe eines weiteren Kraftfahrzeugs. Ein solches Objekt ist zum Beispiel eine geöffnete Ladeklappe eines weiteren Kraftfahrzeugs, insbesondere eines Lastkraftwagens.

Ein Überhang im Sinne der Beschreibung ist insbesondere ein Objekt, welches an einem weiteren Objekt angeordnet ist bzw. von dem weiteren Objekt umfasst ist, wobei der Überhang über die Grundfläche des weiteren Objekts hinausragt. Ein solches Objekt ist zum Beispiel ein Fahrradträger bzw. ein Gepäckträger, welcher an einem weiteren Kraftfahrzeug (weiteres Objekt) angeordnet ist. Ein solches Objekt ist zum Beispiel auf einem Dach eines weiteren Kraftfahrzeugs angeordnet und ragt vorne und/oder hinten über die Grundfläche des weiteren Kraftfahrzeugs hinaus. Zum Beispiel ist ein solches Objekt teilweise in einem Kofferraum eines weiteren Kraftfahrzeugs angeordnet und ragt aus diesem über die Grundfläche des weiteren Kraftfahrzeugs hinaus.

Ein Überhang kann als ein Überhangsobjekt bezeichnet werden.

Gemäß einer Ausführungsform ist vorgesehen, dass das Ermitteln basierend auf den Messdaten, ob ein Objekt die virtuelle Wand durchdrungen hat, umfasst, dass die Messdaten mit Referenzmessdaten verglichen werden.

Dadurch wird zum Beispiel der technische Vorteil bewirkt, dass das Ermitteln effizient durchgeführt werden kann. Die Referenzmessdaten entsprechen zum Beispiel einer Referenzmessung, wenn kein Objekt die virtuelle Wand durchdringt. Durch den Vergleich der Messdaten mit den Referenzmessdaten kann dann insbesondere eine Veränderung in der virtuellen Wand erkannt werden. Zum Beispiel wird ein durch die virtuelle Wand dringendes Objekt detektiert, wenn eine Veränderung erkannt wird. Zum Beispiel wird bestimmt, dass kein Objekt die virtuelle Wand durchdringt, wenn keine Veränderung erkannt wird.

Gemäß einer Ausführungsform ist vorgesehen, dass die virtuelle Wand in mehrere entlang des Fahrkorridors verlaufende Wandabschnitte unterteilt wird, wobei das Ermitteln basierend auf den Messdaten, ob ein Objekt die virtuelle Wand durchdrungen hat, umfasst, dass abhängig von einer Bewegung des Kraftfahrzeugs zumindest einer der Wandabschnitte ausgewählt wird, wobei nur für den zumindest einen ausgewählten Wandabschnitt ermittelt wird, ob ein Objekt den zumindest einen ausgewählten Wandabschnitt durchdrungen hat, sodass für die nicht-ausgewählten Wandabschnitte nicht ermittelt wird, ob ein Objekt die nicht-ausgewählten Wandabschnitte durchdrungen hat.

Dadurch wird zum Beispiel der technische Vorteil bewirkt, dass das Ermitteln effizient durchgeführt werden kann. So müssen zum Beispiel keine Wandabschnitte ausgewählt werden, welche bezogen auf eine Fahrtrichtung des Kraftfahrzeugs hinter diesem liegt. Objekte, welche bezogen auf die Fahrtrichtung des Kraftfahrzeugs hinter diesem in den Fahrkorridor durch den Wandabschnitt hineinragen, stellen üblicherweise keine Gefahr für das Kraftfahrzeug dar, zumindest keine unmittelbare Gefahr.

Somit kann zum Beispiel das Ermitteln zeiteffizient und prozessoreffizient, also recheneffizient, durchgeführt werden.

Nach einer Ausführungsform ist das Verfahren nach dem ersten Aspekt ein computerimplementiertes Verfahren.

Nach einer Ausführungsform wird das Verfahren nach dem ersten Aspekt mittels der Vorrichtung nach dem zweiten Aspekt aus- oder durchgeführt.

Technische Funktionalitäten der Vorrichtung nach dem zweiten Aspekt und/oder des Systems nach dem dritten Aspekt ergeben sich unmittelbar aus entsprechenden technischen Funktionalitäten des Verfahrens nach dem ersten Aspekt und umgekehrt. Das heißt also insbesondere, dass sich Vorrichtungsmerkmale und/oder Systemmerkmale aus entsprechenden Verfahrensmerkmalen ergeben und umgekehrt.

In einer Ausführungsform ist der Umfeldsensor an einer Decke des Parkplatzes angeordnet.

In einer Ausführungsform ist der Umfeldsensor an einer Säule des Parkplatzes angeordnet.

Die virtuelle Wand ist gemäß einer Ausführungsform lotrecht oder nicht-lotrecht zu einer Fahrbahn bzw. Fahrfläche, allgemein zu einem Boden des Parkplatzes.

Nach einer Ausführungsform umfasst das Verfahren nach dem ersten Aspekt ein zumindest teilautomatisiertes Steuern der Quer- und/oder Längsführung des Kraftfahrzeugs basierend auf den ausgegebenen Steuersignalen.

Nach einer Ausführungsform umfasst das zumindest teilautomatisierte Steuern der Quer- und/oder Längsführung des Kraftfahrzeugs ein Fernsteuern der Quer- und/oder Längsführung des Kraftfahrzeugs.

Die Formulierung "zumindest ein(e)" umfasst die Formulierung "ein(e) oder mehrere". Mehrere Umfeldsensoren sind zum Beispiel identische Umfeldsensoren oder sind zum Beispiel unterschiedliche Umfeldsensoren. Bei mehreren Umfeldsensoren sind zum Beispiel ein oder mehrere Umfeldsensoren an einer Decke des Parkplatzes angeordnet und/oder sind zum Beispiel ein oder mehrere Umfeldsensoren jeweils an einer Säule des Parkplatzes angeordnet. Mehrere Umfeldsensoren sind gemäß einer Ausführungsform räumlich verteilt innerhalb des Parkplatzes angeordnet. Der Umfeldsensor ist zum Beispiel stationär innerhalb des Parkplatzes angeordnet.

Bei mehreren Umfeldsensoren sind diese in einer Ausführungsform derart angeordnet, dass die mittels der jeweiligen Scanebene definierten virtuellen Wände den Fahrkorridor beidseitig in Längsrichtung begrenzen. Somit sind zum Beispiel eine erste virtuelle Wand und eine der ersten virtuellen Wand gegenüberliegende zweite virtuelle Wand vorgesehen, welche den Fahrkorridor in Längsrichtung begrenzen, wobei die erste und die zweite virtuelle Wand zum Beispiel parallel zueinander sind.

Die Abkürzung "bzw." steht für "beziehungsweise". Die Formulierung "beziehungsweise" steht insbesondere für "respektive". Die Formulierung "respektive" umfasst insbesondere die Formulierung "und/oder".

Ausführungsbeispiele der Erfindung sind in den Zeichnungen dargestellt und in der nachfolgenden Beschreibung näher erläutert. Es zeigen:
- Fig. 1: ein Ablaufdiagramm eines Verfahrens zum zumindest teilautomatisierten Führen eines Kraftfahrzeugs,
- Fig. 2: eine Vorrichtung,
- Fig. 3: ein maschinenlesbares Speichermedium,
- Fig. 4: einen Überhang,
- Fig. 5: einen Parkplatz,
- Fig. 6: einen weiteren Überhang und
- Fig. 7: ein System zum zumindest teilautomatisierten Führen eines Kraftfahrzeugs.

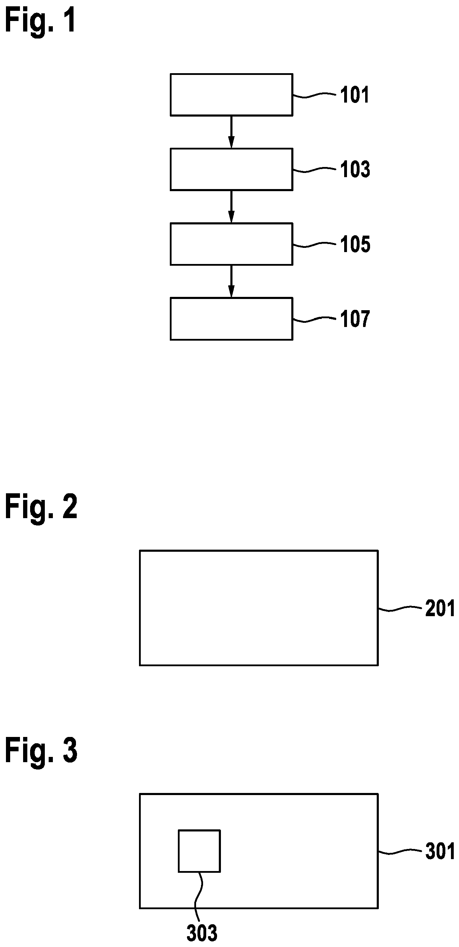

Fig. 1 zeigt ein Ablaufdiagramm eines Verfahrens zum zumindest teilautomatisierten Führen eines Kraftfahrzeugs innerhalb eines Parkplatzes unter Verwendung von zumindest einem innerhalb des Parkplatzes angeordneten Umfeldsensor, welcher jeweils eine Scanebene aufweist, die jeweils eine virtuelle Wand eines Fahrkorridors für das Kraftfahrzeug definiert, umfassend die folgenden Schritte:
Empfangen 101 von Messdatensignalen, welche Messdaten des zumindest einen Umfeldsensors repräsentieren,
Ermitteln 103 basierend auf den Messdaten, ob ein Objekt die zumindest eine virtuelle Wand durchdrungen hat,
Erzeugen 105 von Steuersignalen zum zumindest teilautomatisierten Steuern einer Quer- und/oder Längsführung des Kraftfahrzeugs basierend auf einem Ergebnis des Ermittelns, ob zumindest ein Objekt die zumindest eine virtuelle Wand durchdrungen hat, und
Ausgeben 107 der erzeugten Steuersignale.

Fig. 2 zeigt eine Vorrichtung 201, die eingerichtet ist, alle Schritte des Verfahrens nach dem ersten Aspekt auszuführen.

Fig. 3 zeigt ein maschinenlesbares Speichermedium 301, auf dem ein Computerprogramm 303 gespeichert ist. Das Computerprogramm 303 umfasst Befehle, die bei Ausführung des Computerprogramms 303 durch einen Computer diesen veranlassen, ein Verfahren gemäß dem ersten Aspekt auszuführen.

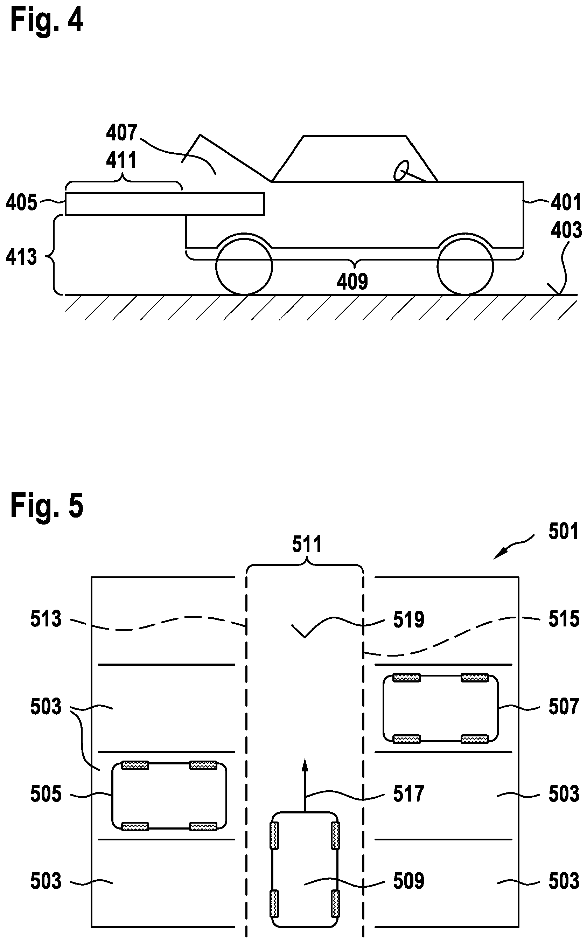

Fig. 4 zeigt ein Kraftfahrzeug 401, welches auf einem Stellplatz 403 abgestellt ist. Das Kraftfahrzeug 401 transportiert ein Objekt in seinem Kofferraum 407, wobei das Objekt 405 aus dem Kofferraum 407 herausragt.

Eine Grundfläche des Kraftfahrzeugs 401 ist mit einer geschweiften Klammer mit dem Bezugszeichen 409 gekennzeichnet.

Über diese Grundfläche 409 ragt das Objekt 405 mit einer Überhanglänge 411 hinaus, wobei diese Überhanglänge 411 mit einer geschweiften Klammer gekennzeichnet ist.

Eine Höhe des Objekts 405 bezogen auf den Stellplatz 403 ist mit einer geschweiften Klammer mit dem Bezugszeichen 413 gekennzeichnet.

Somit ragt das Objekt 405 über die Grundfläche 409 des Kraftfahrzeugs 401 hinaus. Im Sinne der Beschreibung ist das Objekt 405 ein Überhang.

Kraftfahrzeuge, welche an dem Kraftfahrzeug 401 vorbeifahren, können zum Beispiel mit dem Objekt 405 kollidieren.

Es besteht somit ein Bedarf, solche Überhänge 405 zu detektieren.

Dies wird gemäß dem hier beschriebenen Konzept ermöglicht.

Fig. 5 zeigt einen Parkplatz 501 umfassend mehrere Stellplätze 503. Auf den mehreren Stellplätzen 503 parken ein erstes Kraftfahrzeug 505 und ein zweites Kraftfahrzeug 507.

Ein drittes Kraftfahrzeug 509 fährt zwischen den beiden parkenden Kraftfahrzeugen 505, 507 zum Beispiel auf der Suche nach einem freien Stellplatz oder in Richtung einer Ausfahrt (nicht gezeigt) des Parkplatzes 501. Das dritte Kraftfahrzeug 509 wird zum Beispiel zumindest teilautomatisiert geführt.

Es wird ein Fahrkorridor 511 definiert bzw. festgelegt, welcher mittels einer geschweiften Klammer gekennzeichnet ist. Der Übersicht halber sind zwei gestrichelte Linien eingezeichnet, welche den Fahrkorridor 511 beidseitig, also links und rechts bezogen auf die Papierebene, begrenzen. Die linke gestrichelte Linie ist mit dem Bezugszeichen 513 versehen und die rechte gestrichelte Linie ist mit dem Bezugszeichen 515 versehen.

Das dritte Kraftfahrzeug 509 fährt in Fahrtrichtung, gekennzeichnet durch einen Pfeil mit dem Bezugszeichen 517, in dem Fahrkorridor 511.

Sofern zum Beispiel das erste Kraftfahrzeug 503 oder das zweite Kraftfahrzeug 507 analog zum Kraftfahrzeug 401 gemäß Fig. 4 ein entsprechendes Überhangsobjekt in seinem Kofferraum transportierte, könnte das dritte Kraftfahrzeug 517 mit diesem Überhangsobjekt kollidieren.

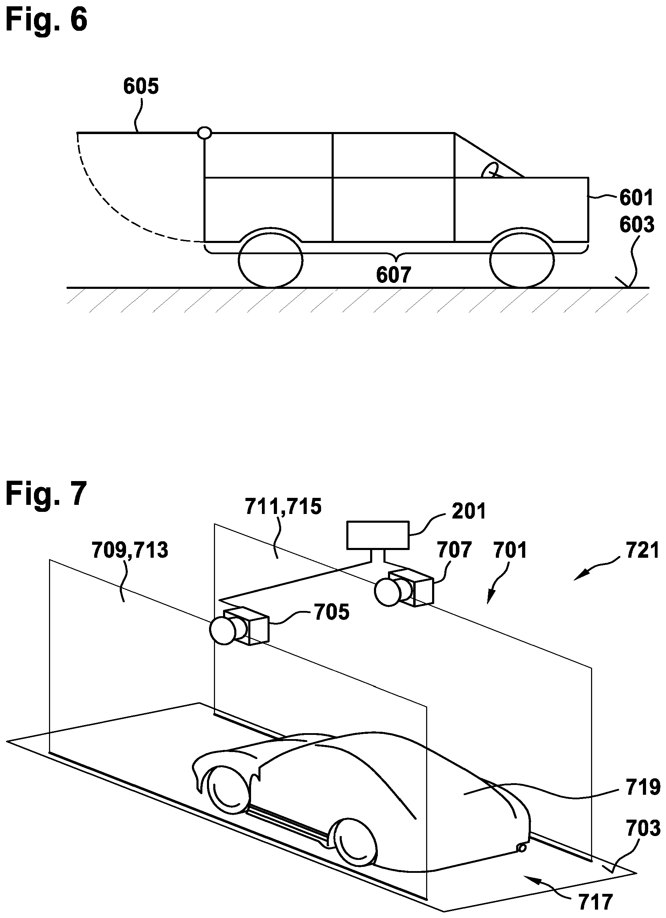

Insofern ist gemäß dem hier beschriebenen Konzept vorgesehen, dass Umfeldsensoren innerhalb des Parkplatzes 501 räumlich verteilt angeordnet sind, wobei diese Umfeldsensoren jeweils eine Scanebene aufweisen, welche eine virtuelle Wand definieren. Der Übersicht halber sind diese Umfeldsensoren in Fig. 5 nicht eingezeichnet. Für eine beispielhafte Anordnung wird auf die Fig. 7 verwiesen.

Die Fig. 5 zeigt eine schematische Draufsicht auf den Parkplatz 501. Die virtuellen Wände sind zum Beispiel lotrecht zu einem Boden 519 des Parkplatzes 501 und verlaufen jeweils entlang der linken und rechten gestrichelten Linie 513, 515, begrenzen also virtuell den Fahrkorridor 511 in Längsrichtung.

Fig. 6 zeigt ein Kraftfahrzeug 601, insbesondere einen VAN (Großraumlimousine), welches auf einem Stellplatz 603 abgestellt ist. Das Kraftfahrzeug 601 weist eine Kofferraumklappe 605 auf, welche sich in einer offenen Position bzw. Stellung befindet. Somit ragt die offene Kofferraumklappe 605 über eine Grundfläche 607 des Kraftfahrzeugs 601 hinaus und ist somit ein Überhang gemäß der Beschreibung.

Fig. 7 zeigt einen Parkplatz 701. Der Parkplatz 701 umfasst eine Fahrfläche 703 für Kraftfahrzeuge.

Der Parkplatz 701 umfasst einen ersten Umfeldsensor 705 und einen zweiten Umfeldsensor 707, welche räumlich verteilt innerhalb des Parkplatzes 701 angeordnet sind. Der erste Umfeldsensor 705 ist zum Beispiel ein Lidarsensor, zum Beispiel ein 2D-Lidarsensor. Der zweite Umfeldsensor 707 ist zum Beispiel ein Lidarsensor, zum Beispiel ein 2D-Lidarsensor.

Zum Beispiel sind die beiden Umfeldsensoren 705, 707 jeweils an einer Säule (nicht gezeigt) des Parkplatzes 701 angeordnet. Zum Beispiel sind die beiden Umfeldsensoren 705, 707 an einer Decke (nicht gezeigt) des Parkplatzes 701 angeordnet.

Der erste Umfeldsensor 705 weist eine erste Scanebene 709 auf. Der zweite Umfeldsensor 707 weist eine zweite Scanebene 711 auf.

Die beiden Scanebenen 709, 711 verlaufen vorzugsweise lotrecht zur Fahrfläche 703. Die erste Scanebene 709 legt eine erste virtuelle Wand 713 fest bzw. definiert eine solche. Die zweite Scanebene 711 legt eine zweite virtuelle Wand 715 fest bzw. definiert eine solche.

Die beiden virtuellen Wände 713, 715 begrenzen virtuell somit einen Fahrkorridor 717 in Längsrichtung, in welchem ein Kraftfahrzeug 719 zumindest teilautomatisiert geführt werden kann.

Weiter ist die Vorrichtung 201 gemäß Fig. 2 vorgesehen, welche mit den beiden Umfeldsensoren 705, 707 verbunden ist. Insofern können die beiden Umfeldsensoren 705, 707 ihre jeweiligen Messdatensignale der Vorrichtung 201 bereitstellen.

Mittels der Vorrichtung 201 ist es nun ermöglicht, basierend auf den Messdaten zu ermitteln, ob ein Objekt zum Beispiel die erste virtuelle Wand 713 und/oder die zweite virtuelle Wand 715 durchdrungen hat. Basierend auf einem entsprechenden Ergebnis erzeugt die Vorrichtung 201 Steuersignale zum zumindest teilautomatisierten Steuern einer Quer- und/oder Längsführung des Kraftfahrzeugs 719. Die Vorrichtung 201 gibt anschließend die erzeugten Steuersignale aus. Beispielsweise werden die erzeugten Steuersignale an eine drahtlose Kommunikationsschnittstelle (nicht gezeigt) ausgegeben, mittels welcher die erzeugten Steuersignale als Fernsteuersignale an das Kraftfahrzeug 719 gesendet werden können.

Es ist also in vorteilhafter Weise ermöglicht, Objekte zu detektieren, welche bezogen auf den Fahrkorridor 717 die virtuellen Wände 713, 715 von außen durchdringen. Weiter ist es in vorteilhafter Weise ermöglicht, zu detektieren, sofern das Kraftfahrzeug 719 eine oder beide der virtuellen Wände 713, 715 bezogen auf den Fahrkorridor 717 von innen durchdringt. Zum Beispiel kann so in vorteilhafter Weise detektiert werden, wenn das Kraftfahrzeug 719 eine ihm vorgegebene Solltrajektorie verlässt und aus dem Fahrkorridor 717 hinausfährt. Entsprechend erzeugte Steuersignale zum zumindest teilautomatisierten Steuern einer Quer- und/oder Längsführung des Kraftfahrzeugs 719 können dann zum Beispiel derart sein, dass bei einem zumindest teilautomatisierten Steuern der Quer- und/oder Längsführung des Kraftfahrzeugs 719 basierend auf diesen Steuersignalen das Kraftfahrzeug 719 zurück in den Fahrkorridor 717 fährt.

In einer Ausführungsform ist vorgesehen, dass die Messdaten mit Referenzmessdaten verglichen werden, wobei die Referenzmessdaten eine nicht durch ein Objekt durchdrungene virtuelle Wand 713, 715 beschreiben bzw. charakterisieren. Bei einer Veränderung der Messdaten bezogen auf die Referenzmessdaten kann zum Beispiel bestimmt werden, dass ein Objekt die entsprechende virtuelle Wand 713, 715 durchdrungen hat.

In einer Ausführungsform ist vorgesehen, dass das Verfahren nur dann durchgeführt wird, wenn sich ein zumindest teilautomatisiert geführtes Kraftfahrzeug in einer Nähe des zumindest einen Umfeldsensors befindet.

Eine maximale Höhe und/oder Dichte der Umfeldsensoren hängen zum Beispiel von den Umfeldsensorspezifikationen ab. Eine vorgegebene Distanz von den Seiten des Kraftfahrzeugs ist beispielsweise basierend auf Sicherheitsspezifikationen des Systems gewählt. Zum Beispiel hängt die vorgegebene Distanz von einer erlaubten bzw. zulässigen Länge von einem Überhang ab und/oder von einer maximal zulässigen Geschwindigkeit von weiteren Kraftfahrzeugen und/oder von Fußgängern und/oder von einer maximal zulässigen Abweichung des zumindest teilautomatisiert geführten Kraftfahrzeugs von einer Solltrajektorie ab.

In Fig. 7 ist insofern ein System 721 zum zumindest teilautomatisierten Führen eines Kraftfahrzeugs innerhalb eines Parkplatzes gezeigt, wobei das System 721 die beiden Umfeldsensoren 705, 707 umfasst sowie die Vorrichtung 201.

## Patentansprüche

1. Verfahren zum zumindest teilautomatisierten Führen eines Kraftfahrzeugs (719) innerhalb eines Parkplatzes (501, 701) unter Verwendung von zumindest einem innerhalb des Parkplatzes (501, 701) angeordneten Umfeldsensor (705, 707), welcher jeweils eine Scanebene (709, 711) aufweist, die jeweils eine virtuelle Wand (713, 715) eines Fahrkorridors (511, 717) für das Kraftfahrzeug (719) definiert, umfassend die folgenden Schritte:
Empfangen von Messdatensignalen, welche Messdaten des zumindest einen Umfeldsensors (705, 707) repräsentieren,
Ermitteln basierend auf den Messdaten, ob ein Objekt die virtuelle Wand (713, 715) durchdrungen hat,
Erzeugen von Steuersignalen zum zumindest teilautomatisierten Steuern einer Quer- und/oder Längsführung des Kraftfahrzeugs (719) basierend auf einem Ergebnis des Ermittelns, ob zumindest ein Objekt die virtuelle Wand (713, 715) durchdrungen hat, und
Ausgeben der erzeugten Steuersignale,
wobei das zumindest eine Objekt einen Überhang (405, 605) umfasst, wobei das Ermitteln basierend auf den Messdaten, ob ein Objekt die virtuelle Wand (713, 715) durchdrungen hat, umfasst, dass basierend auf den Messdaten ermittelt wird, ob der Überhang (405, 605) die virtuelle Wand (713, 715) von außen bezogen auf den Fahrkorridor (511, 717) durchdrungen hat, wobei die Steuersignale basierend auf einem Ergebnis des Ermittelns erzeugt werden, ob der Überhang (405, 605) die virtuelle Wand (713, 715) von außen bezogen auf den Fahrkorridor (511, 717) durchdrungen hat.

2. Verfahren nach Anspruch 1, wobei das zumindest eine Objekt das Kraftfahrzeug (719) umfasst, wobei das Ermitteln basierend auf den Messdaten, ob ein Objekt die virtuelle Wand (713, 715) durchdrungen hat, umfasst, dass basierend auf den Messdaten ermittelt wird, ob das Kraftfahrzeug (719) die virtuelle Wand (713, 715) von innen bezogen auf den Fahrkorridor (511, 717) durchdrungen hat, wobei die Steuersignale basierend auf einem Ergebnis des Ermittelns erzeugt werden, ob das Kraftfahrzeug (719) die virtuelle Wand (713, 715) von innen bezogen auf den Fahrkorridor (511, 717) durchdrungen hat.

3. Verfahren nach einem der vorherigen Ansprüche, wobei das Ermitteln basierend auf den Messdaten, ob ein Objekt die virtuelle Wand (713, 715) durchdrungen hat, umfasst, dass die Messdaten mit Referenzmessdaten verglichen werden.

4. Verfahren nach einem der vorherigen Ansprüche, wobei die virtuelle Wand (713, 715) in mehrere entlang des Fahrkorridors (511, 717) verlaufende Wandabschnitte unterteilt wird, wobei das Ermitteln basierend auf den Messdaten, ob ein Objekt die virtuelle Wand (713, 715) durchdrungen hat, umfasst, dass abhängig von einer Bewegung des Kraftfahrzeugs (719) zumindest einer der Wandabschnitte ausgewählt wird, wobei nur für den zumindest einen ausgewählten Wandabschnitt ermittelt wird, ob ein Objekt den zumindest einen ausgewählten Wandabschnitt durchdrungen hat, sodass für die nicht-ausgewählten Wandabschnitte nicht ermittelt wird, ob ein Objekt die nicht-ausgewählten Wandabschnitte durchdrungen hat.

5. Vorrichtung (201), die eingerichtet ist, alle Schritte des Verfahrens nach einem der vorherigen Ansprüche auszuführen.

6. System (721) zum zumindest teilautomatisierten Führen eines Kraftfahrzeugs (719) innerhalb eines Parkplatzes (501, 701), umfassend:
zumindest einen innerhalb des Parkplatzes (501, 701) angeordneten Umfeldsensor (705, 707), welcher eine Scanebene (709, 711) aufweist, die eine virtuelle Wand (713, 715) eines Fahrkorridors (511, 717) für das Kraftfahrzeug (719) definiert, und
die Vorrichtung (201) nach Anspruch 6.

7. Computerprogramm (303), umfassend Befehle, die bei Ausführung des Computerprogramms (303) durch einen Computer diesen veranlassen, ein Verfahren gemäß einem der Ansprüche 1 bis 4 auszuführen.

8. Maschinenlesbares Speichermedium (301), auf dem das Computerprogramm (303) nach Anspruch 7 gespeichert ist.

## Claims

1. Method for the at least partially automated driving of a motor vehicle (719) within a car park (501, 701) using at least one environment sensor (705, 707), which is arranged within the car park (501, 701) and in each case has a scanning plane (709, 711) that in each case defines a virtual wall (713, 715) of a driving corridor (511, 717) for the motor vehicle (719), comprising the following steps:
receiving measurement data signals that represent measurement data of the at least one environment sensor (705, 707),
determining, based on the measurement data, whether an object has penetrated the virtual wall (713, 715).
generating control signals for the at least partially automated control of lateral and/or longitudinal guidance of the motor vehicle (719) based on a result of the determining of whether at least one object has penetrated the virtual wall (713, 715), and
outputting the generated control signals,
the at least one object comprising an overhang (405, 605), the determining, based on the measurement data, of whether an object has penetrated the virtual wall (713, 715) comprising determining, based on the measurement data, whether the overhang (405, 605) has penetrated the virtual wall (713, 715) from the outside with respect to the driving corridor (511, 717), the control signals being generated based on a result of the determining of whether the overhang (405, 605) has penetrated the virtual wall (713, 715) from the outside with respect to the driving corridor (511, 717).

2. Method according to Claim 1, the at least one object comprising the motor vehicle (719), the determining, based on the measurement data, of whether an object has penetrated the virtual wall (713, 715) comprising determining, based on the measurement data, whether the motor vehicle (719) has penetrated the virtual wall (713, 715) from the inside with respect to the driving corridor (511, 717), the control signals being generated based on a result of the determining of whether the motor vehicle (719) has penetrated the virtual wall (713, 715) from the inside with respect to the driving corridor (511, 717).

3. Method according to either of the preceding claims, the determining, based on the measurement data, of whether an object has penetrated the virtual wall (713, 715) comprising comparing the measurement data with reference measurement data.

4. Method according to one of the preceding claims, the virtual wall (713, 715) being divided into multiple wall sections extending along the driving corridor (511, 717), the determining, based on the measurement data, of whether an object has penetrated the virtual wall (713, 715) comprising taking a motion of the motor vehicle (719) as a basis for selecting at least one of the wall sections, only the at least one selected wall section being the subject of determination of whether an object has penetrated the at least one selected wall section, so that the non-selected wall sections are not the subject of determination of whether an object has penetrated the non-selected wall sections.

5. Device (201) configured to perform all the steps of the method according to one of the preceding claims.

6. System (721) for the at least partially automated driving of a motor vehicle (719) within a car park (501, 701), comprising:
at least one environment sensor (705, 707), which is arranged within the car park (501, 701) and has a scanning plane (709, 711) that defines a virtual wall (713, 715) of a driving corridor (511, 717) for the motor vehicle (719), and the device (201) according to Claim 6.

7. Computer program (303) comprising instructions that, when the computer program (303) is executed by a computer, cause said computer to carry out a method according to one of Claims 1 to 4.

8. Machine-readable storage medium (301) on which the computer program (303) according to Claim 7 is stored.

## Revendications

1. Procédé de guidage au moins partiellement automatisé d'un véhicule à moteur (719) sur un parc de stationnement (501, 701) en utilisant au moins un capteur d'environnement (705, 707) disposé à l'intérieur du parc de stationnement (501, 701), lequel comporte un plan de balayage (709, 711) qui définit une paroi virtuelle (713, 715) d'un couloir de conduite (511, 717) pour le véhicule à moteur (719), comprenant les étapes suivantes :
réception de signaux de données de mesure, qui représentent des données de mesure de l'au moins un capteur environnant (705, 707),
détermination, sur la base des données de mesure, si un objet a traversé la paroi virtuelle (713, 715),
génération de signaux de commande pour la commande au moins partiellement automatisée d'un guidage transversal et/ou longitudinal du véhicule à moteur (719) sur la base d'un résultat de la détermination pour savoir si au moins un objet a traversé la paroi virtuelle (713, 715), et
émission des signaux de commande générés,
l'au moins un objet comprenant un porte-à-faux (405, 605), la détermination sur la base des données de mesure pour savoir si un objet a traversé la paroi virtuelle (713, 715) comprenant la détermination sur la base des données de mesure pour savoir si le porte-à-faux (405, 605) a traversé la paroi virtuelle (713, 715) depuis l'extérieur par rapport au couloir de conduite (511, 717), les signaux de commande étant générés sur la base du résultat de la détermination pour savoir si le porte-à-faux (405, 605) a traversé la paroi virtuelle (713, 715) depuis l'extérieur par rapport au couloir de conduite (511, 717).

2. Procédé selon la revendication 1, l'au moins un objet comprenant le véhicule à moteur (719), la détermination sur la base des données de mesure pour savoir si un objet a traversé la paroi virtuelle (713, 715) comprenant la détermination sur la base des données de mesure pour savoir si le véhicule à moteur (719) a traversé la paroi virtuelle (713, 715) depuis l'intérieur par rapport au couloir de conduite (511, 717), les signaux de commande étant générés sur la base d'un résultat de la détermination pour savoir si le véhicule à moteur (719) a traversé la paroi virtuelle (713, 715) depuis l'intérieur par rapport au couloir de conduite (511, 717).

3. Procédé selon l'une des revendications précédentes, la détermination sur la base des données de mesure pour savoir si un objet a traversé la paroi virtuelle (713, 715) comprenant la comparaison des données de mesure à des données de mesure de référence.

4. Procédé selon l'une des revendications précédentes, la paroi virtuelle (713, 715) étant divisée en plusieurs sections de paroi s'étendant le long du couloir de conduite (511, 717), la détermination sur la base des données de mesure pour savoir si un objet a traversé la paroi virtuelle (713, 715) comprenant la sélection d'au moins une des sections de paroi en fonction d'un déplacement du véhicule à moteur (719), le fait de savoir si un objet a traversé l'au moins une section de paroi sélectionnée étant déterminé seulement pour l'au moins une section de paroi sélectionnée si bien qu'il n'est pas déterminé pour les sections de paroi non sélectionnées si un objet a traversé les sections de paroi non sélectionnées.

5. Dispositif (201), qui est mis au point pour exécuter toutes les étapes du procédé selon l'une des revendications précédentes.

6. Système (721) de guidage au moins partiellement automatisé d'un véhicule à moteur (719) à l'intérieur d'un parc de stationnement (501, 701), comprenant :
au moins un capteur d'environnement (705, 707) disposé à l'intérieur du parc de stationnement (501, 701), lequel comporte un plan de balayage (709, 711) qui définit une paroi virtuelle (713, 715) d'un couloir de conduite (511, 717) pour le véhicule à moteur (719), et
le dispositif (201) selon la revendication 6.

7. Programme informatique (303), comprenant des instructions qui, lorsque le programme informatique (303) est exécuté par un ordinateur, amènent celui-ci à exécuter un procédé selon l'une des revendications 1 à 4.

8. Support de stockage (301) lisible par machine, sur lequel est stocké le programme informatique (303) selon la revendication 7.
